# FASCICULE DE BREVET EUROPEEN

(11) **EP 3 810 911 B1**
(45) Date de publication et mention de la délivrance du brevet: **27.07.2022**
(21) Numéro de dépôt: 19737860.7
(22) Date de dépôt: 13.06.2019
(51) Int. Cl.: F02C 7/32, F02C 7/36, F01D 25/16

(54) **TURBOMACHINE D'AÉRONEF À AU MOINS DEUX CORPS ET PRÉLÈVEMENT DE PUISSANCE**
FLUGZEUGTURBINENTRIEBWERK MIT MINDESTENS ZWEI KÖRPERN UND VORRICHTUNG ZUR ENERGIEVERSORGUNG
AIRCRAFT TURBINE ENGINE HAVING AT LEAST TWO BODIES AND MEANS FOR DRAWING POWER

(30) Priorité: 22.06.2018 FR 1855607
(43) Date de publication de la demande: 28.04.2021
(73) Titulaire: SAFRAN AIRCRAFT ENGINES, 75015 Paris (FR)
(72) Inventeur: CHARIER, Gilles, Alain, Marie, 77550 Moissy-Cramayel (FR); FRANTZ, Caroline, Marie, 77550 Moissy-Cramayel (FR); GUILLOTEL, Loïc, Paul, Yves, 77550 Moissy-Cramayel (FR); MILLIER, Vincent, François, Georges, 77550 Moissy-Cramayel (FR)
(74) Mandataire: Gevers & Orès
(86) Numéro de dépôt international: PCT/FR2019/051427
(87) Numéro de publication internationale: WO 2019/243712

(56) Documents cités:
- EP-A1- 1 701 019
- WO-A1-99/47799
- FR-A1- 2 645 907
- US-A1- 2012 213 629

## Description

### DOMAINE TECHNIQUE

La présente invention concerne une turbomachine d'aéronef à au moins deux corps et dotées de moyens de prélèvement de puissance.

### ETAT DE L'ART

L'état de l'art comprend notamment les documents EP-A1-1 701 019, WO-A1-99/47799, US-A1-2012/213629, FR-A1-2 645 907, FR-A1-3 026 775 et WO-A1-2015/166187.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3 corps). Dans ces architectures, la turbomachine comprend un corps basse pression et un corps haute pression, chaque corps comportant un arbre reliant un rotor d'un compresseur à un rotor d'une turbine.

Il est connu de prélever une puissance mécanique sur un de ces corps et de renvoyer cette puissance jusqu'à un générateur électrique afin de produire de l'énergie électrique, ce générateur pouvant en outre assurer une fonction de démarreur et donc de moteur électrique au démarrage de la turbomachine.

Des moyens de prélèvement de puissance sur un corps de turbomachine comportent classiquement un arbre de prélèvement de puissance dont une extrémité porte un pignon conique engrené avec une roue conique de renvoi entraînée par le corps.

Avec les technologies actuellement connues, l'intégration d'un prélèvement de forte puissance sur le corps basse pression d'une turbomachine, en particulier à fort taux de dilution et réducteur, s'avère très complexe. Les dimensions et l'encombrement des moyens de prélèvement de puissance sont trop importants pour envisager une intégration similaire à celle de moyens de prélèvement sur un corps haute pression. Il n'est ainsi pas possible de monter directement une roue de renvoi directement sur l'arbre du corps basse pression.

Une solution pourrait consister à ajouter un train d'engrenages entre l'arbre du corps basse pression et l'arbre de prélèvement de puissance. Cependant, les moyens de prélèvement deviendraient plus complexes et plus encombrants du fait du nombre élevé de pièces nécessaires.

La chaine de côtes comprendrait plusieurs pignons dont un fixé directement sur l'arbre du corps basse pression. Les paliers de guidage du corps seraient axialement éloignés de ce pignon, ce qui risquerait de poser des problèmes de respect du jeu d'engrènement entre les pignons.

Par ailleurs, une turbomachine à fort taux de dilution est caractérisée notamment par un diamètre réduit du moteur (qui est du type à taille de guêpe). La veine d'écoulement du flux primaire dans le moteur a ainsi un diamètre interne faible qui réduit notamment l'espace annulaire disponible entre les corps et cette veine s'étendant autour des corps. Les moyens de prélèvement de puissance et en particulier le train d'engrenages précité ne pourrait pas y être montés car ils seraient trop encombrants radialement et interféreraient avec la veine.

Enfin, on a constaté que les moyens de prélèvement de puissance ont tendance à transmettre des vibrations et des sollicitations dynamiques à des paliers, par l'intermédiaire des supports de ces paliers. Ces vibrations peuvent s'avérer néfastes au fonctionnement et à la durée de vie des paliers ainsi que de la turbomachine.

La présente invention propose une solution à au moins une partie des problèmes évoqués dans ce qui précède.

### EXPOSE DE L'INVENTION

L'invention propose une turbomachine d'aéronef, cette turbomachine comportant au moins un corps basse pression et un corps haute pression, ainsi que des moyens de prélèvement de puissance sur au moins ledit corps basse pression, lesdits moyens de prélèvement comportant un premier arbre de prélèvement de puissance s'étendant sensiblement radialement par rapport à un axe longitudinal de rotation desdits corps, ce premier arbre de prélèvement comportant une extrémité radialement interne portant un premier pignon conique engrené avec une première roue conique de renvoi entraînée par ledit corps basse pression, la turbomachine comportant en outre un premier support annulaire de palier s'étendant autour dudit axe et solidaire d'un stator, ledit premier support de palier comportant une première portion sensiblement cylindrique qui s'étend coaxialement à une seconde portion sensiblement cylindrique de ladite roue de renvoi, ces première et seconde portions étant guidées l'une à l'intérieur de l'autre par des paliers, caractérisée en ce que ladite roue de renvoi est entraînée par ledit corps basse pression par l'intermédiaire d'une pièce annulaire d'amortissement qui est indépendante dudit premier support de palier.

La présente invention propose ainsi une solution au prélèvement de puissance sur un corps basse pression ou BP.

On comprend que la roue de renvoi est entraînée par le corps par l'intermédiaire d'une pièce d'amortissement qui est apte à absorber des vibrations et/ou des sollicitations dynamiques du fait de sa capacité de déformation élastique. Par ailleurs, le support de palier est indépendant de cette pièce d'amortissement qui ne transmet donc pas de vibrations et/ou de sollicitations dynamiques au support de paliers ainsi qu'aux paliers auxquels le support de palier est associé. Ceci garantit un fonctionnement optimal des paliers et en particulier un guidage optimal des pièces centrées par ces paliers, tels que par exemple l'arbre de prélèvement de puissance.

La turbomachine selon l'invention peut comprendre une ou plusieurs des caractéristiques suivantes
- lesdites première et seconde portions sont guidées par deux paliers adjacents et écartés axialement l'un de l'autre, tels qu'un palier à billes et un palier à rouleaux,
- ledit premier support de palier est fixé ou relié à un boîtier de guidage dudit arbre de prélèvement,
- ledit premier support de palier a en demi section axiale une forme générale en L dont la périphérie radialement interne comprend ladite première portion et est destinée à être entourée au moins en partie par ladite roue de renvoi,
- ladite roue de renvoi a en demi section axiale une forme générale en L dont la périphérie radialement interne comprend ladite seconde portion et est destinée à être entourée au moins en partie par ledit support de palier,
- ladite roue de renvoi est entraînée par ledit corps basse pression par l'intermédiaire d'une pièce annulaire d'amortissement ayant une capacité de déformation élastique en torsion autour dudit axe et/ou en direction radiale,
- ladite roue de renvoi est entraînée par ledit corps basse pression par l'intermédiaire d'une pièce annulaire d'amortissement ayant une rangée annulaire d'orifices traversants et/ou ayant une portion annulaire à demi section axiale en C dont l'ouverture est orientée axialement vers l'amont ou vers l'aval,
- ledit premier pignon conique et ladite première roue de renvoi sont logés dans une enceinte de lubrification d'un palier de guidage du corps haute pression,
- la turbomachine comprend également des moyens de prélèvement de puissance sur ledit corps haute pression, ces moyens de prélèvement comportant un second arbre de prélèvement de puissance s'étendant sensiblement radialement par rapport audit axe et comportant une extrémité radialement interne portant un second pignon conique engrené avec une seconde roue conique de renvoi entraînée par ledit corps haute pression, ledit second pignon et ladite seconde roue de renvoi étant logés dans ladite enceinte de lubrification,
- la turbomachine comprend un carter intermédiaire comportant une virole annulaire autour de laquelle est disposée une rangée annulaire de bras tubulaires, cette virole séparant ladite enceinte de lubrification d'une veine annulaire d'écoulement de gaz s'étendant autour de cette enceinte, et s'étendant axialement entre ledit premier support de palier et ledit palier de guidage du corps haute pression, lesdites premier et second arbres de prélèvement s'étendant à travers des bras différents de ce carter intermédiaire.

La présente invention concerne également un procédé d'assemblage modulaire d'une turbomachine telle que décrite ci-dessus, comprenant les étapes consistant à :
(a) monter un premier module de turbomachine, ce premier module comportant au moins une partie du corps haute pression, au moins une partie du carter intermédiaire, une partie du corps basse pression dont son arbre principal, ainsi que les seconds moyens de prélèvement de puissance,
(b) monter un second module de turbomachine et l'assembler par translation axiale depuis l'amont sur et autour d'une partie dudit premier module, ce second module comportant ledit premier support de palier ainsi que lesdits premiers moyens de prélèvement de puissance, et
(c) monter un troisième module de turbomachine et l'assembler par translation axiale depuis l'amont, ce troisième module comportant une partie du corps basse pression dont un arbre secondaire, ainsi que ladite pièce d'amortissement, ce troisième module comportant une partie engagée radialement entre des parties desdits premier et second modules, cet assemblage permettant de mettre en prise via des cannelures, d'une part, les arbres principal et secondaire du corps basse pression, et d'autre part, via d'autres cannelures la pièce d'amortissement portée par ledit arbre secondaire avec ladite roue de renvoi ou une pièce intermédiaire déjà en prise avec cette roue de renvoi.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en coupe axiale d'une turbomachine d'aéronef à fort taux de dilution et réducteur ;
- la figure 2 est une vue schématique de moyens de prélèvement de puissance sur des corps basse pression et haute pression d'une turbomachine,
- la figure 3 est une demi vue schématique partielle en coupe axiale de moyens de prélèvement de puissance selon un mode de réalisation d'une turbomachine d'aéronef selon l'invention ;
- la figure 4 est une vue similaire à celle de la figure 3 et représente des étapes de montage modulaire de la turbomachine de cette figure 3 ;
- la figure 5 est une demi vue schématique partielle en coupe axiale de moyens de prélèvement de puissance selon une variante de réalisation d'une turbomachine d'aéronef selon l'invention ; et
- la figure 6 est une vue similaire à celle de la figure 5 et représente des étapes de montage modulaire de la turbomachine de cette figure 5.

### DESCRIPTION DETAILLEE

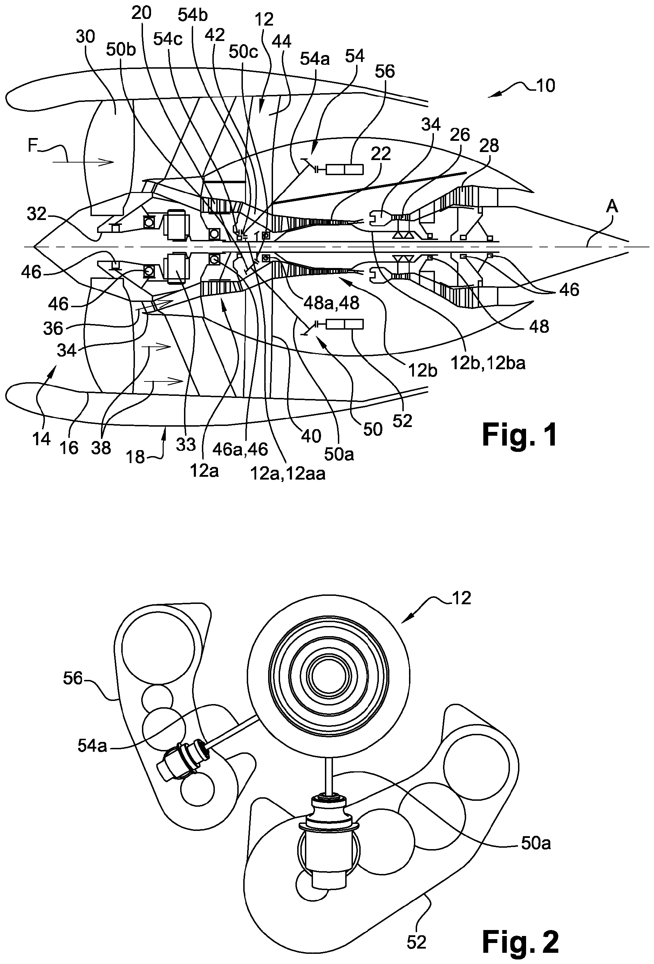

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter de soufflante 16 qui fait partie d'une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui alimente le générateur de gaz 12, et en un flux annulaire radialement externe, appelé flux secondaire 38 qui s'écoule entre le générateur de gaz 12 et la nacelle 18 et fournit la majeure partie de la poussée de la turbomachine.

Un carter intermédiaire 40 est situé entre les compresseurs basse et haute pression 20, 22 et relie structurellement le générateur de gaz 12 au carter de soufflante 16 et à la nacelle 18. Le carter intermédiaire 40 comprend une rangée annulaire de bras 42 radialement internes s'étendant dans le flux primaire 36, entre les veines des compresseurs basse et haute pression 20, 22, et une rangée annulaire de bras 44 radialement externes s'étendant dans le flux secondaire 38. Les bras 42, 44 sont en général en nombre limités (moins de dix), tubulaires et traversés par des servitudes.

Le rotor du corps basse pression 12a ainsi que l'arbre de soufflante 32 sont guidés par des paliers 46. Le rotor du corps haute pression 12b est guidé par des paliers 48. Les paliers 46, 48 sont du type à billes ou à rouleaux et comprennent chacun une bague interne montée sur l'arbre à guider, une bague externe portée par un support annulaire de paliers et un roulement entre les bagues.

Les supports de paliers s'étendent autour de l'axe A et sont des pièces fixes reliées au stator et par exemple au carter intermédiaire 40 pour ce qui est des paliers 46a, 48a à billes de guidage des extrémités amont des rotors BP et HP. Chacun des rotors BP et HP comprend un arbre principal et éventuellement des pièces annulaires rapportées telles que des tourillons, etc.

La turbomachine 10 comprend des moyens 50 de prélèvement de puissance sur le corps HP 12b, qui comprennent un arbre 50a de prélèvement de puissance qui a une orientation sensiblement radiale par rapport à l'axe A. L'arbre 50a a son extrémité radialement interne qui est située au voisinage du corps HP et porte un pignon conique 50b qui engrène avec une roue de renvoi 50c solidaire de l'extrémité amont de l'arbre 12ba du corps HP 12b. L'extrémité radialement externe de l'arbre 50a est reliée à des engrenages d'une boîte d'accessoires 52, communément appelé AGB qui est l'acronyme de l'anglais *Accessory Gear Box* (figures 1 et 2). La boîte d'accessoires 52 est située dans un espace annulaire s'étendant autour du générateur de gaz 12 entre les veines d'écoulement des flux primaire et secondaire 36, 38. L'arbre 50a traverse la veine d'écoulement du flux primaire en passant à travers l'un des bras 42 du carter intermédiaire 40.

La turbomachine 10 comprend en outre des moyens 54 de prélèvement de puissance sur le corps BP 12a, qui comprennent un arbre 54a de prélèvement de puissance qui a une orientation sensiblement radiale par rapport à l'axe A. L'arbre 54a a son extrémité radialement interne qui est située au voisinage du corps BP et porte un pignon conique 54b qui engrène avec une roue de renvoi 54c solidaire de l'extrémité amont de l'arbre 12aa du corps BP 12a. L'extrémité radialement externe de l'arbre 54a est reliée à des engrenages d'une autre boîte d'accessoires 56, communément appelé AGB (figures 1 et 2). La boîte d'accessoires 56 est située dans l'espace annulaire précité et l'arbre 54a traverse la veine d'écoulement du flux primaire en passant à travers un autre des bras 42 du carter intermédiaire 40.

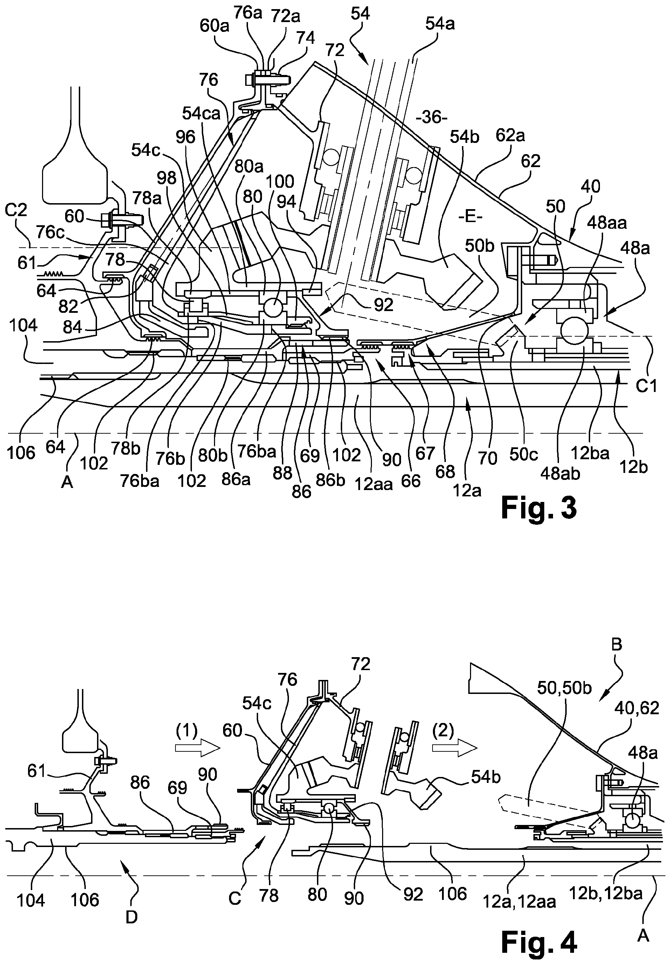

Comme cela est mieux visible à la figure 3, le palier 48a de guidage de l'arbre 12ba du corps HP 12b est situé dans une enceinte annulaire E de lubrification de ce palier. Cette enceinte E a une demi section axiale ayant une forme générale triangulaire. Elle est ici délimitée à sa périphérie interne par l'extrémité amont de l'arbre 12ba du corps HP 12b et par une portion de l'arbre 12aa du corps BP 12a qui traverse axialement l'arbre 12ba du corps HP 12b. L'enceinte E est en outre délimitée, du côté amont, par un capot annulaire 60 et, du côté aval, par une virole tronconique 62 du carter intermédiaire 40 dont la surface périphérique radialement externe 62a délimite intérieurement la veine d'écoulement du flux primaire 36.

Le capot 60 a une forme générale tronconique dont l'extrémité amont de plus petit diamètre entoure la portion précitée de l'arbre 12aa du corps BP 12a, et dont l'extrémité aval de plus grand diamètre est fixée, par exemple par des boulons 74, à l'extrémité amont de plus grand diamètre de la virole 62. L'extrémité aval de plus petit diamètre de la virole 62 porte la bague externe 48aa du palier 48a, sa bague interne 48ab étant solidaire en rotation de l'extrémité amont de l'arbre 12ba du corps HP 12b.

L'enceinte E est ainsi délimitée par des pièces de rotor et des pièces de stator. L'enceinte E est rendue étanche par des joints annulaires au niveau des interstices entre les pièces de rotor et de stator. C'est le cas entre le capot 60 et un tourillon 61 solidaire en rotation du corps BP 12a où sont situés des joints d'étanchéité à labyrinthe référencés 64. C'est également le cas entre le carter intermédiaire 40 et les arbres 12aa, 12ba des corps BP et HP, des joints d'étanchéité à labyrinthe 66, 67 étant situés entre un anneau d'étanchéité 68 fixé au carter 40 et ces corps 12a, 12b. L'anneau 68 est fixé par son extrémité radialement externe au carter 40 et son extrémité radialement interne comprend une portion cylindrique portant des éléments abradables dont un premier, amont, coopère avec des léchettes annulaires en saillie du joint 66 situées sur une pièce annulaire 69 du corps BP 12a, et dont un second, aval, coopère avec des léchettes annulaires en saillie du joint 67 situées à l'extrémité amont de l'arbre 12ba du corps HP 12b.

En ce qui concerne les moyens 50 de prélèvement de puissance sur le corps HP 12b, la roue de renvoi 50c, le pignon 50b ainsi que l'extrémité radialement interne de l'arbre 50a (ici non représentée) sont logés dans l'enceinte E.

De la même façon, en ce qui concerne les moyens 54 de prélèvement de puissance sur le corps BP 12a, la roue de renvoi 54c, le pignon 54b ainsi que l'extrémité radialement interne de l'arbre 54a sont logés dans l'enceinte E.

Les arbres 50a, 54a peuvent être inclinés par rapport à un plan perpendiculaire à l'axe A de la turbomachine, et peuvent avoir des angles d'inclinaison similaires, comme dans l'exemple représenté.

Comme évoqué dans ce qui précède et illustré à la figure 2, les arbres 50a, 54a ne passent pas à travers les mêmes bras du carter intermédiaire 40 et forment donc un angle entre eux. Ils sont par exemple logés respectivement dans les bras situés à 6h et 8h par analogie avec le cadran d'une horloge. Le pignon 50b est représenté en traits pointillés à la figure 3 pour faciliter la compréhension de l'invention mais il ne se situe pas dans le plan de coupe de la vue.

L'engrènement entre le pignon 50b et la roue de renvoi 50c est situé sensiblement sur une circonférence C1 dont le diamètre est inférieur à celui de la circonférence C2 d'engrènement du pignon 54b avec la roue 54c.

L'anneau 68 comprend une lumière 70 traversante qui est traversée par le pignon 50b qui peut tourner dans cette lumière. Comme indiqué ci-dessus, cette lumière 70 est représentée pour faciliter la compréhension de l'invention mais elle ne se situe pas dans le plan de coupe de la vue.

L'extrémité radialement interne de l'arbre 54a est guidée par un boîtier 72 fixé au capot 60 et au carter intermédiaire 40. Le boîtier 72 comprend ici deux paliers coaxiaux, respectivement à rouleaux et à billes, et comprend une bride annulaire radialement externe 72a de fixation à une bride annulaire radialement externe 60a du capot 60.

Les brides 72a, 60a sont fixées entre elles, voire également au carter intermédiaire 40, par les boulons 74 et une bride annulaire radialement externe 76a d'un support annulaire de paliers 76 est ici intercalée entre ces brides 72a, 60a.

Le support 76 porte des paliers 78, 80 de guidage de la roue de renvoi 54c. La roue 54c comprend une paroi cylindrique 54ca solidaire des bagues externes 78a, 80a des paliers 78, 80, qui sont ici adjacents et écartés axialement l'un de l'autre. Le palier 78 est à rouleaux et est situé à l'amont, et l'autre palier 80, à l'aval, est à billes. Les bagues internes 78b, 80b des paliers 70, 80 sont solidaires d'une paroi sensiblement cylindrique 76b du support de palier 76. A l'inverse, le palier 78 est à rouleaux et pourrait être situé à l'aval, et l'autre palier 80, ici à l'amont, est à billes.

On comprend donc que la paroi 76b du support de palier 76 s'étend radialement à l'intérieur de la paroi 54ca de la roue. La paroi 76b est reliée à la bride 76a par une paroi tronconique 76c qui s'évase radialement vers l'extérieur de l'amont vers l'aval. Comme on le voit à la figure 3, la paroi 76c s'étend le long du capot 60 et définit avec celui-ci un espace annulaire dans lequel peut s'étendre une conduite 82 de circulation d'huile. La paroi 76b s'étend autour et à distance radiale du corps BP 12a et définit avec celle-ci un espace annulaire dans lequel est notamment logé une rangée annulaire de gicleurs d'huile 84 raccordés à la conduite 82. Les gicleurs 84 sont configurés pour projeter de l'huile vers les paliers 78, 80, cette huile étant projetée sur la surface radialement interne de la paroi 76b et acheminée jusqu'aux paliers 78, 80 par des perçages 76ba de la paroi 76b.

On comprend donc que le support de paliers 76 est solidaire du capot 60 et fait partie d'un stator de la turbomachine. La roue de renvoi 54c est solidarisée en rotation avec le corps BP 12a par l'intermédiaire d'une pièce annulaire d'amortissement 86.

Dans l'exemple représenté, la pièce 86 est fixée sur le corps BP 12a. Elle comprend une portion amont 86a sensiblement cylindrique qui est serrée axialement entre le tourillon 61 et la pièce 69. Elle comprend en outre une portion aval 86b de plus grand diamètre qui comprend, d'une part, une rangée annulaire de trous traversants 88 et d'autre part une rangée annulaire de cannelures externes 90. Les trous 88 sont positionnés et dimensionnés pour conférer à la pièce 86 une certaine souplesse en torsion, de façon à ce que la pièce soit apte à amortir des vibrations et/ou des sollicitations dynamiques en fonctionnement. Les cannelures 90 coopèrent avec des cannelures complémentaires de la périphérie interne d'une pièce annulaire de liaison 92 dont la périphérie externe est fixée à la roue de renvoi 54c, et est par exemple serrée entre la bague externe 80a du palier 80 et un écrou 94 rapporté et vissé radialement à l'intérieur de la paroi 54ca de la roue de renvoi 54c. Une entretoise 96 est intercalée entre les bagues externes 78a, 80a des paliers 78, 80 pour les maintenir écartées et en position. De la même façon, une entretoise 98 est intercalée entre les bagues internes 78b, 80b des paliers 78, 80 et un écrou 100 est rapportée et vissé radialement à l'extérieur de la paroi cylindrique 76b du support de paliers 76.

Des jeux de cannelures 102 sont en outre prévus pour solidariser en rotation le tourillon 61, la pièce d'amortissement 86 et la pièce 69 au reste du corps BP 12a. Le tourillon 61, la pièce d'amortissement 86 et la pièce 69 comprennent des cannelures internes qui coopèrent avec des cannelures externes d'un arbre 104 du corps BP, qui coopère lui-même par un autre jeu de cannelures 106 avec l'arbre 12aa du corps BP 12a.

L'arbre 104 peut être l'arbre d'entrée du réducteur 33 ou bien l'arbre de la soufflante 14 lorsque la turbomachine ne comprend pas de réducteur.

La figure 4 montre de manière très schématique l'assemblage modulaire de la turbomachine 10. Trois modules sont ici représentés et assemblés par translation axiale les uns vers les autres et engagés axialement les uns dans les autres.

Les modules sont de préférence pré assemblés puis fixés les uns aux autres. Le premier module B, représenté à droite sur le dessin, comprend au moins une partie du corps haute pression 12b, au moins une partie du carter intermédiaire 40, une partie du corps basse pression 12a dont son arbre principal 12aa, ainsi que les seconds moyens de prélèvement de puissance 50.

Le second module C, au centre, comprend le capot 60, le support de palier 76, le boîtier 72, les moyens de prélèvement de puissance 54, et la pièce de liaison 92. Il est à remarquer que le support 76 porte les paliers 78, 80 de guidage de la roue de renvoi 54c comme décrit précédemment.

Le troisième module D, à gauche, comprend l'arbre 104, le tourillon 61, et les pièces 86, 69. Ce troisième module est inséré axialement à l'intérieur du second module C, jusqu'à ce que les cannelures 90 de la pièce d'amortissement 86 et de la pièce de liaison 92 coopèrent entre elles.

L'ensemble comportant le second et le troisième modules C, D est alors monté sur le premier module B, par translation axiale de l'amont vers l'aval, jusqu'à ce que les cannelures 106 des arbres 104, 12aa coopèrent ensemble.

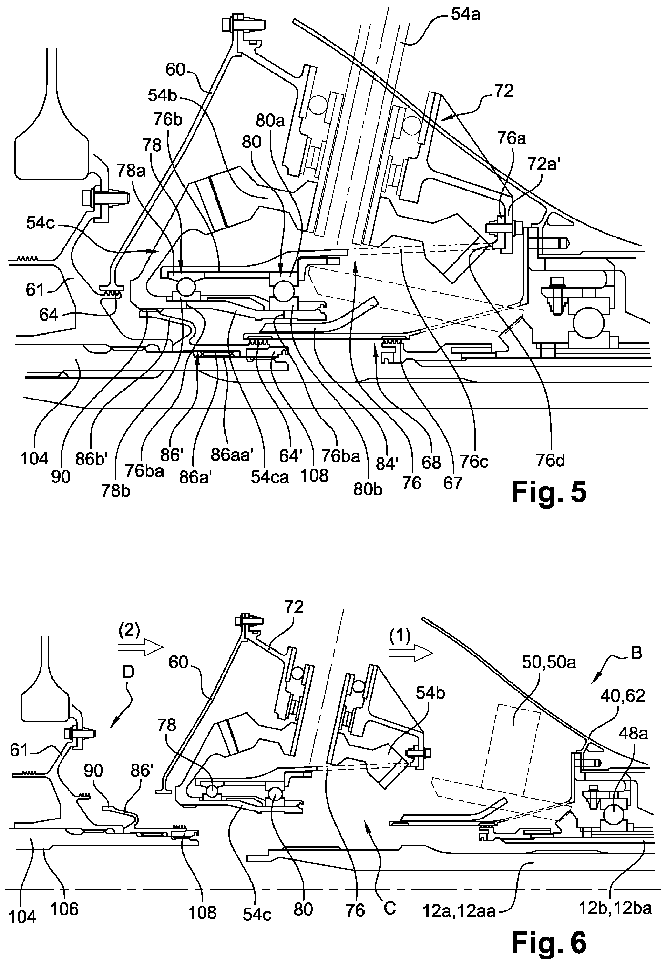

Les figures 5 et 6 sont similaires aux figures 3 et 4 et illustrent une variante de réalisation de l'invention. Cette variante comprend pour l'essentiel les mêmes caractéristiques que celles décrites dans ce qui précède en relation avec le premier mode de réalisation.

La différence essentielle repose sur le fait que la partie cylindrique 54ca de la roue de renvoi 54c est ici située radialement à l'intérieur (et non plus à l'extérieur) de la paroi cylindrique 76b du support de paliers 76.

On comprend donc que les bagues externes 78a, 80a des paliers 78, 80 sont ici fixées à la paroi 76b, et les bagues internes 78b, 80b sont fixées à la paroi 54ca.

Le support de palier 76 a sa bride radialement externe 76a qui est fixée à une bride annulaire radialement interne 72a' du boîtier 72. La paroi 76c du support de paliers 76 comprend une ouverture 76d traversante de passage et de rotation du pignon 54b car la paroi 76 s'étend ici radialement à l'intérieur de l'extrémité radialement interne de l'arbre 54a de prélèvement de puissance.

La paroi 54ca de la roue de renvoi 54c s'étend autour du corps BP 12a, la roue de renvoi étant solidarisée en rotation avec le corps BP par l'intermédiaire d'une unique pièce annulaire, qui est la pièce d'amortissement 86'. Cette pièce 86' est ici serrée axialement entre le tourillon 61, situé à l'amont, et un écrou 108 à l'aval. L'ensemble est monté sur l'arbre 104.

La pièce 86' comprend une portion cylindrique radialement interne 86a' s'étendant entre le tourillon 61 et l'écrou 108 et accouplée par des cannelures internes 86aa' à des cannelures externes complémentaires de l'arbre 104, et une portion de souplesse radialement externe 86b'. Cette portion 86b' a une demi section axiale en forme de C dont l'ouverture est orientée axialement, ici vers l'amont. Cette portion 86b' comprend à sa périphérie externe des cannelures externes 90 qui coopèrent avec des cannelures internes complémentaires de la paroi 54ca de la roue de renvoi.

L'huile de lubrification des paliers 78, 80 n'est pas ici amenée par l'amont de la roue de renvoi 54c, mais par l'aval. Des gicleurs d'huile 84' sont ici situés dans l'espace annulaire s'étendant entre la paroi 54ca de la roue de renvoi 54c et l'anneau 68.

Des joints d'étanchéité 64, 64' du type à labyrinthe sont situés ici d'une part entre le capot 60 et le tourillon 61 et d'autre part entre l'extrémité aval de la pièce 86' et l'extrémité amont de l'anneau d'étanchéité 68. Un autre joint d'étanchéité à labyrinthe 67 est situé entre cet anneau d'étanchéité 68 et l'extrémité amont de l'arbre 12ba du corps HP 12b.

La figure 6 montre de manière très schématique l'assemblage modulaire de cette variante de la turbomachine 10. Trois modules sont ici représentés et assemblés par translation axiale les uns vers les autres et engagés axialement les uns dans les autres.

Les modules sont de préférence pré assemblés puis fixés les uns aux autres. Le premier module B, représenté à droite sur le dessin, comprend au moins une partie du corps haute pression 12b, au moins une partie du carter intermédiaire 40, une partie du corps basse pression 12a dont son arbre principal 12aa, ainsi que les seconds moyens de prélèvement de puissance 50.

Le second module C, au centre, comprend le capot 60, le support de paliers 76, le boîtier 72, et les moyens de prélèvement de puissance 54.

Le troisième module D, à gauche, comprend l'arbre 104, le tourillon 61, et la pièce 86'. Ce troisième module est inséré axialement à l'intérieur du second module C, jusqu'à ce que les cannelures 90 de la pièce d'amortissement 86 et de la roue de renvoi 54c coopèrent entre elles.

L'ensemble comportant le second et le troisième modules C, D est alors monté au moins partiellement autour du premier module B, par translation axiale de l'amont vers l'aval, jusqu'à ce que les cannelures 106 des arbres 104, 12aa coopèrent ensemble.

L'invention permet de réaliser un prélèvement de puissance sur les corps BP et HP dans une même zone et en particulier dans une même enceinte. L'arrêt axial de chacun de ces corps est réalisé par un palier de butée à billes. L'un de ces paliers, à savoir celui du corps HP (référencé 48a), est situé dans cette enceinte E et l'autre, à savoir celui du corps BP, est situé en amont de cette enceinte et donc distant (il est entouré à la figure 1). Cette situation aboutit à un éloignement entre le palier à billes du corps BP et le prélèvement de puissance sur ce corps. Cet éloignement est compensé par l'accouplement en cannelures et l'accrochage du support de paliers 76 et du boîtier 72 sur le même carter.

L'invention permet d'avoir un engrènement de prise de puissance compact et indépendant des déplacements et des chaines de côtes du corps BP. L'entrainement du pignon 54b est effectué par une pièce intermédiaire86, 86' qui bénéficie d'une partie souple de façon à isoler l'engrènement du reste du moteur. L'enceinte E est commune à l'engrènement et à des paliers dont la lubrification est assurée par des gicleurs 84, 84'.

## Revendications

1. Turbomachine (10) d'aéronef, cette turbomachine comportant au moins un corps basse pression (12a) et un corps haute pression (12b), ainsi que des moyens (54) de prélèvement de puissance sur au moins ledit corps basse pression, lesdits moyens de prélèvement comportant un premier arbre (54a) de prélèvement de puissance s'étendant sensiblement radialement par rapport à un axe longitudinal (A) de rotation desdits corps, ce premier arbre de prélèvement comportant une extrémité radialement interne portant un premier pignon conique (54b) engrené avec une première roue conique de renvoi (54c) entraînée par ledit corps basse pression, la turbomachine comportant en outre un premier support annulaire de palier (76) s'étendant autour dudit axe et solidaire d'un stator, ledit premier support de palier comportant une première portion (76b) sensiblement cylindrique qui s'étend coaxialement à une seconde portion (54ca) sensiblement cylindrique de ladite roue de renvoi, ces première et seconde portions étant guidées l'une à l'intérieur de l'autre par des paliers (78, 80), **caractérisée en ce que** ladite roue de renvoi est entraînée par ledit corps basse pression par l'intermédiaire d'une pièce annulaire d'amortissement (86, 86') qui est indépendante dudit premier support de palier.

2. Turbomachine (10) selon la revendication 1, dans laquelle lesdites première et seconde portions (76b, 54ca) sont guidées par deux paliers (78, 80) adjacents et écartés axialement l'un de l'autre, tels qu'un palier à billes et un palier à rouleaux.

3. Turbomachine (10) selon la revendication 1 ou 2, dans laquelle ledit premier support de palier (76) est fixé ou relié à un boîtier (72) de guidage dudit arbre de prélèvement (54a).

4. Turbomachine (10) selon l'une des revendications 1 à 3, dans laquelle ledit premier support de palier (76) a en demi section axiale une forme générale en L dont la périphérie radialement interne comprend ladite première portion (76b) et est destinée à être entourée au moins en partie par ladite roue de renvoi (54c).

5. Turbomachine (10) selon l'une des revendications 1 à 3, dans laquelle ladite roue de renvoi (54c) a en demi section axiale une forme générale en L dont la périphérie radialement interne comprend ladite seconde portion (54ca) et est destinée à être entourée au moins en partie par ledit support de palier (76).

6. Turbomachine (10) selon l'une des revendications 1 à 5, dans laquelle ladite roue de renvoi (54c) est entraînée par ledit corps basse pression (12a) par l'intermédiaire d'une pièce annulaire (86, 86') d'amortissement ayant une capacité de déformation élastique en torsion autour dudit axe (A) et/ou en direction radiale.

7. Turbomachine (10) selon l'une des revendications 1 à 6, dans laquelle ladite roue de renvoi (54c) est entraînée par ledit corps basse pression (12a) par l'intermédiaire d'une pièce annulaire (86, 86') d'amortissement ayant une rangée annulaire d'orifices (88) traversants et/ou ayant une portion annulaire (86b') à demi section axiale en C dont l'ouverture est orientée axialement vers l'amont ou vers l'aval.

8. Turbomachine (10) selon l'une des revendications 1 à 7, dans laquelle ledit premier pignon conique (54b) et ladite première roue de renvoi (54c) sont logés dans une enceinte (E) de lubrification d'un palier (48a) de guidage du corps haute pression (12b).

9. Turbomachine (10) selon la revendication 8, dans laquelle elle comprend également des moyens (50) de prélèvement de puissance sur ledit corps haute pression (12b), ces moyens de prélèvement comportant un second arbre (50a) de prélèvement de puissance s'étendant sensiblement radialement par rapport audit axe (A) et comportant une extrémité radialement interne portant un second pignon conique (50b) engrené avec une seconde roue conique de renvoi (50c) entraînée par ledit corps haute pression, ledit second pignon et ladite seconde roue de renvoi étant logés dans ladite enceinte de lubrification (E).

10. Turbomachine (10) selon la revendication 9, dans laquelle elle comprend un carter intermédiaire (40) comportant une virole annulaire (62) autour de laquelle est disposée une rangée annulaire de bras tubulaires (44), cette virole séparant ladite enceinte de lubrification (E) d'une veine annulaire d'écoulement de gaz s'étendant autour de cette enceinte, et s'étendant axialement entre ledit premier support de palier (76) et ledit palier (48a) de guidage du corps haute pression (12b), lesdits premier et second arbres de prélèvement (50a, 54a) s'étendant à travers des bras différents de ce carter intermédiaire.

11. Procédé d'assemblage modulaire d'une turbomachine (10) selon la revendication 10, comprenant les étapes consistant à :
(a) monter un premier module (B) de turbomachine, ce premier module comportant au moins une partie du corps haute pression (12b), au moins une partie du carter intermédiaire (40), une partie du corps basse pression (12a) dont son arbre principal (12aa), ainsi que les seconds moyens (50) de prélèvement de puissance,
(b) monter un second module (C) de turbomachine et l'assembler par translation axiale depuis l'amont sur et autour d'une partie dudit premier module (B), ce second module comportant ledit premier support de palier (76) ainsi que lesdits premiers moyens (54) de prélèvement de puissance, et
(c) monter un troisième module (D) de turbomachine et l'assembler par translation axiale depuis l'amont, ce troisième module comportant une partie du corps basse pression dont un arbre secondaire (104), ainsi que ladite pièce d'amortissement (86, 86'), ce troisième module comportant une partie engagée radialement entre des parties desdits premier et second modules (B, C), cet assemblage permettant de mettre en prise via des cannelures (106), d'une part, les arbres principal et secondaire (12aa, 104) du corps basse pression (12a), et d'autre part, via d'autres cannelures (90) la pièce d'amortissement (86, 86') portée par ledit arbre secondaire (104) avec ladite roue de renvoi (54c) ou une pièce intermédiaire (92) déjà en prise avec cette roue de renvoi.

## Patentansprüche

1. Turbomaschine (10) eines Luftfahrzeugs, wobei diese Turbomaschine zumindest einen Niederdruckkörper (12a) und einen Hochdruckkörper (12b) sowie Mittel (54) zur Leistungsentnahme an zumindest dem besagten Niederdruckkörper umfasst, wobei die besagten Mittel zur Entnahme eine erste Welle (54a) zur Leistungsentnahme umfassen, die sich im Wesentlichen radial in Bezug auf eine Längsdrehwelle (A) besagter Körper erstreckt, wobei diese erste Welle zur Entnahme ein radial inneres Ende mit einem ersten Kegelrad (54b) umfasst, das mit einem ersten konischen Getrieberad (54c) ineinandergreift, das von besagtem Niederdruckkörper angetrieben wird, wobei die Turbomaschine weiter einen ersten ringförmigen Lagerträger (76) umfasst, der sich um besagte Achse erstreckt und fest mit einem Stator verbunden ist,
wobei besagter erste Lagerträger einen im Wesentlichen zylindrischen ersten Abschnitt (76b) umfasst, der sich koaxial zu einem zweiten im Wesentlichen zylindrischen Abschnitt (54ca) des besagten Getrieberads erstreckt, wobei dieser erste und zweite Abschnitt durch Lager (78, 80) ineinander geführt werden,
**dadurch gekennzeichnet, dass** besagtes Getrieberad durch besagten Niederdruckkörper mittels eines ringförmigen Dämpfungsteils (86, 86') angetrieben wird, das unabhängig von besagtem ersten Lagerträger ist.

2. Turbomaschine (10) nach Anspruch 1, worin der besagte erste und zweite Abschnitt (76b, 54ca) von zwei benachbarten und axial voneinander beabstandeten Lagern (78, 80) geführt werden, wie zum Beispiel einem Kugellager und einem Rollenlager.

3. Turbomaschine (10) nach Anspruch 1 oder 2, worin besagter erste Lagerträger (76) an einem Führungsgehäuse (72) der besagten Welle zur Entnahme (54a) befestigt ist oder mit ihm verbunden ist.

4. Turbomaschine (10) nach einem der Ansprüche 1 bis 3, worin besagter erste Lagerträger (76) im axialen Halbquerschnitt eine allgemeine L-Form aufweist, deren radial innerer Umfang besagten ersten Abschnitt (76b) umfasst und dazu bestimmt ist, zumindest teilweise von besagtem Getrieberad (54c) umgeben zu sein.

5. Turbomaschine (10) nach einem der Ansprüche 1 bis 3, worin besagtes Getrieberad (54c) im axialen Halbquerschnitt eine allgemeine L-Form aufweist, deren radial innerer Umfang den besagten Abschnitt (54ca) umfasst und dazu bestimmt ist, zumindest teilweise von besagtem Lagerträger (76) umgeben zu sein.

6. Turbomaschine (10) nach einem der Ansprüche 1 bis 5, worin besagtes Getrieberad (54c) von dem besagten Niederdruckkörper (12a) mittels eines ringförmigen Dämpfungsteils (86, 86') angetrieben wird, das eine elastische Drehverformbarkeit um die besagte Welle (A) und/oder in radialer Richtung hat.

7. Turbomaschine (10) nach einem der Ansprüche 1 bis 6, worin besagtes Getrieberad (54c) durch den besagten Niederdruckkörper (12a) mittels eines ringförmigen Dämpfungsteils (86, 86') angetrieben wird, das eine ringförmige Reihe mit durchgehenden Öffnungen (88) und/oder einen ringförmigen Abschnitt (86b') mit axialem C-Halbquerschnitt aufweist, dessen Öffnung axial stromaufwärts oder stromabwärts ausgerichtet ist.

8. Turbomaschine (10) nach einem der Ansprüche 1 bis 7, worin besagtes erstes Kegelrad (54b) und besagtes erstes Getrieberad (54c) in einer Schmierumgrenzung (E) eines Führungslagers (48a) des Hochdruckkörpers (12b) untergebracht ist.

9. Turbomaschine (10) nach Anspruch 8, worin sie außerdem Mittel (50) zur Leistungsentnahme an dem besagten Hochdruckkörper (12b) umfasst, wobei diese Mittel zur Entnahme eine zweite Welle (50a) zur Leistungsentnahme umfassen, die sich im Wesentlichen radial in Bezug auf besagte Achse (A) erstreckt und ein radial inneres Ende mit einem zweiten Kegelrad (50b) umfasst, das mit einem zweiten konischen Getrieberad (50c) in Eingriff steht, das von dem besagten Hochdruckkörper angetrieben wird, wobei besagtes zweites Kegelrad und besagtes zweites Getrieberad in besagter Schmierumgrenzung (E) untergebracht sind.

10. Turbomaschine (10) nach Anspruch 9, worin sie ein dazwischen liegendes Gehäuse (40) umfasst, das eine ringförmige Halterung (62) umfasst, um die eine ringförmige Reihe mit röhrenförmigen Armen (44) angeordnet ist, wobei diese Halterung besagte Schmierumgrenzung (E) von einer ringförmigen Gasströmungsbahn, die sich um dieses Umgrenzung erstreckt, trennt und sich axial zwischen dem besagten Lagerträger (76) und dem besagten Führungslager (48a) des Hochdruckkörpers (12b) erstreckt, wobei die besagte erste und zweite Welle zur Entnahme (50a, 54a) sich durch verschiedene Arme dieses dazwischen liegenden Gehäuses erstrecken.

11. Verfahren des modularen Zusammenbauens einer Turbomaschine (10) nach Anspruch 10, das die folgenden Schritte umfasst:
(a) Montieren eines ersten Turbomaschinenmoduls (B), wobei dieses erste Modul zumindest einen Abschnitt des Hochdruckkörpers (12b), zumindest einen Abschnitt des dazwischen liegenden Gehäuses (40), einen Abschnitt des Niederdruckkörpers (12a), darunter seine Hauptwelle (12aa), sowie die zweiten Mittel (50) zur Leistungsentnahme umfasst,
(b) Montieren eines zweiten Turbomaschinenmoduls (C) und dessen Zusammenbauen durch axiale Translation von stromaufwärts auf und um einen Abschnitt des besagten ersten Moduls (B), wobei dieses zweite Modul den besagten Lagerträger (76) sowie die besagten ersten Mittel (54) zur Leistungsentnahme umfasst, und
(c) Montieren eines dritten Turbomaschinenmoduls (D) und dessen Zusammenbauen durch axiale Translation von stromabwärts, wobei dieses dritte Modul einen Abschnitt des Niederdruckkörpers, darunter eine Nebenwelle (104), sowie besagtes Dämpfungsteil (86, 86') umfasst, wobei dieses dritte Modul einen radial zwischen den Abschnitten des besagten ersten und zweiten Moduls (B, C) in Eingriff gebrachten Abschnitt umfasst, wobei es dieser Zusammenbau ermöglicht, über Nuten (106) einerseits die Haupt- und Nebenwelle (12aa, 104) des Niederdruckkörpers (12a), und andererseits, über andere Nuten (90) das Dämpfteil (86, 86'), das von besagter Nebenwelle (104) getragen wird, mit besagtem Getrieberad (54c) oder einem dazwischen liegenden Teil (92), das bereits in Eingriff mit diesem Getrieberad ist, in Eingriff zu bringen.

## Claims

1. An aircraft turbine engine (10), this turbine engine comprising at least one low-pressure body (12a) and one high-pressure body (12b), as well as means (54) for drawing power on at least said low-pressure body, said drawing means comprising a first power drawing shaft (54a) extending substantially radially with respect to a longitudinal axis (A) of rotation of said bodies, this first drawing shaft comprising a radially inner end carrying a first bevel gear (54b) meshed with a first idler bevel wheel (54c) driven by said low-pressure body, the turbine engine further comprising a first annular bearing support (76) extending around said axis and integral with a stator,
said first bearing support comprising a first substantially cylindrical portion (76b) which extends coaxially with a second substantially cylindrical portion (54ca) of said idler wheel, these first and second portions being guided one inside the other by bearings (78, 80), **characterized in that** said idler wheel is driven by said low-pressure body through an annular damping part (86, 86') which is independent of said first bearing support.

2. The turbine engine (10) according to claim 1, wherein said first and second portions (76b, 54ca) are guided by two adjacent bearings (78, 80) axially spaced from each other, such as a ball bearing and a roller bearing.

3. The turbine engine (10) according to claim 1 or 2, wherein said first bearing support (76) is fixed or connected to a housing (72) for guiding said drawing shaft (54a).

4. The turbine engine (10) according to one of claims 1 to 3, wherein said first bearing support (76) has in axial half-section a generally L-shape whose radially inner periphery comprises said first portion (76b) and is intended to be surrounded at least in part by said idler wheel (54c).

5. The turbine engine (10) according to one of claims 1 to 3, wherein said idler wheel (54c) has in axial half-section a generally L-shape, whose radially inner periphery comprises said second portion (54ca) and is intended to be surrounded at least in part by said bearing support (76).

6. The turbine engine (10) according to one of claims 1 to 5, wherein said idler wheel (54c) is driven by said low-pressure body (12a) via an annular damping part (86, 86') having a capacity for elastic deformation in torsion about said axis (A) and/or in the radial direction.

7. The turbine engine (10) according to one of claims 1 to 6, wherein said idler wheel (54c) is driven by said low-pressure body (12a) via an annular damping part (86, 86') having an annular row of through orifices (88) and/or having an annular portion (86b') with a C-shaped axial half-section, the opening of which is oriented axially upstream or downstream.

8. The turbine engine (10) according to one of claims 1 to 7, wherein said first bevel gear (54b) and said first deflection wheel (54c) are housed in an enclosure (E) for lubricating a bearing (48a) for guiding the high-pressure body (12b).

9. The turbine engine (10) according to claim 8, wherein it also comprises means (50) for drawing power on said high-pressure body (12b), these drawing means comprising a second power drawing shaft (50a) extending substantially radially with respect to said axis (A) and comprising a radially inner end carrying a second bevel gear (50b) meshing with a second idler bevel wheel (50c) driven by said high-pressure body, said second gear and said second idler wheel being housed in said lubrication enclosure (E).

10. The turbine engine (10) according to claim 9, wherein it comprises an intermediate casing (40) comprising an annular shroud (62) around which is arranged an annular row of tubular arms (44), this shroud separating said lubrication enclosure (E) from an annular gas flow duct extending around this enclosure, and extending axially between said first bearing support (76) and said bearing (48a) for guiding the high-pressure body (12b), said first and second drawing shafts (50a, 54a) extending through different arms of this intermediate casing.

11. A method of modular assembly of a turbine engine (10) according to claim 10, comprising the steps of:
(a) assembling a first module (B) of the turbine engine, this first module comprising at least a part of the high-pressure body (12b), at least a part of the intermediate casing (40), a part of the low-pressure body (12a) including its main shaft (12aa), and the second power drawing means (50),
(b) mounting a second turbine engine module (C) and assembling it by axial translation from upstream on and around a part of said first module (B), this second module comprising said first bearing support (76) and said first power drawing means (54), and
(c) mounting a third turbine engine module (D) and assembling it by axial translation from upstream, this third module comprising a part of the low-pressure body including a secondary shaft (104), as well as said damping part (86, 86'), this third module comprising a part engaged radially between parts of said first and second modules (B, C), this assembly enabling to engage the main and secondary shafts (12aa, 104) of the low-pressure body (12a) via splines (106), on the one hand, and, the damping part (86, 86') carried by said secondary shaft (104) with said idler wheel (54c) or an intermediate part (92) already engaged with this idler wheel via other splines (90), on the other hand.
